# EUROPEAN PATENT APPLICATION

(11) **EP 1 432 180 A1**
(43) Date of publication of application: **23.06.2004**
(21) Application number: 03026544.1
(22) Date of filing: 18.11.2003
(51) Int. Cl.: H04L 12/56

(54) **Client software download in bluetooth device bonding**

(30) Priority: 20.12.2002 US 326794
(71) Applicant: Nokia Corporation, 02150 Espoo (FI)
(72) Inventor: Kotola, Sakari, 02700 Kauniainen Espoo (FI)
(74) Representative: Becker Kurig Straus

(57) **Abstract**

The present invention discloses a system and method for controlling a Bluetooth device (150) from a different Bluetooth device (100). The system employs two Java capable Bluetooth devices (100,150) in communication with one another. The controlling device (100) must have user input and feedback elements capable of creating a user interface. The controlled device (150) must be able to transmit a Java control application and execute received commands.

## Description

### FIELD OF THE INVENTION

This invention relates generally to short range wireless communication systems, and more particularly, to delivering control means, and exercising control, wirelessly connected devices.

### BACKGROUND OF THE INVENTION

Bluetooth is a short-range radio network, originally intended as a cable replacement. It can be used to create ad hoc networks of up to eight devices operating together. The Bluetooth Special Interest Group, Specification Of The Bluetooth System, Volumes 1 and 2, Core and Profiles: Version 1.1, February 22, 2001, describes the principles of Bluetooth device operation and communication protocols. The devices operate in the 2.4 GHz radio band reserved for general use by Industrial, Scientific, and Medical (ISM) applications. Bluetooth devices are designed to find other Bluetooth devices within their ten-meter radio communications range and to discover what services they offer.

A connection between two Bluetooth devices is initiated by an inquiring device sending out an inquiry message searching for other devices in its vicinity. Any other Bluetooth device that is listening by means of conducting an inquiry scan, will recognize the inquiry message and respond. The inquiry response is a frequency hop synchronization (FHS) packet containing all of the information required by the inquiring device to address the responding device. This information includes the clock value of the sender (i.e., the responding device), the sender's correct device access code, and the class-of-device (CoD) field. The access code includes the lower address part (LAP) and the upper address part (UAP) of the sender's Bluetooth Device Address (BD_ADDR), a unique, 48-bit IEEE address that is electronically engraved into each Bluetooth device.

The class-of-device (CoD) field of the FHS packet indicates which device class the sender belongs to, such as printer access point, network access point, PDA, cellular telephone, and the like. The class-of-device (CoD) field is a 24 bit field divided into three subfields and a two-bit format field. The high order eleven bit subfield is reserved for indicating general service classes such as information, telephony, audio, object transfer, capturing, rendering, networking, and positioning. The middle five bit subfield comprises the major device class, which can indicate up to 32 different device types. The low order six bit subfield consists of the minor device class, which can indicate up to 64 different variations of each device type. The lowest order two bits are the format field for identifying the format type of the CoD field.

The inquiring device will become the master and the responding device will become the slave in the eventual piconet, if a connection is established. To establish a connection, the inquiring device must enter the page state. The inquiring/paging device uses the information provided in the inquiry response packet, to prepare and send a paging message to the responding device. The inquiring/paging device uses the estimated clock CLKE and access code of the responding device (i.e., the eventual slave device) to temporarily synchronize with it. Since the inquiring/paging device intends to be the master, it includes an assignment of an active member address (AM_ADDR) in the paging message. The paging message sent by the inquiring/paging device is also a frequency hop synchronization (FHS) packet containing all of the information required by the responding device to directly reply to the inquiring/paging device. This information includes the clock value of the sender (i.e., the inquiring/paging device) and the inquiring/paging device's correct device access code. The responding device must be in the page scan state to allow the inquiring/paging device to connect with it. Once in the page scan state, the responding device will receive the paging packet that provides the clock timing and access code of the inquiring/paging device. The responding device responds with a page acknowledgment packet. This enables the two devices to form a connection and both devices transition into the connection state. The inquiring/paging device that has initiated the connection assumes the role of a master device and the responding device assumes the role of a slave device in a new ad hoc network piconet, using the CLK clock timing and access code of the master device.

With communications established between the Bluetooth devices more interesting networked activities can be accomplished. Bluetooth provides useful protocols and procedures for facilitating these higher level activities. One procedure of particular interest is device bonding or pairing (bonding and pairing are used synonymously throughout). Bonding is relevant to Bluetooth connections between devices where authentication is required. Authentication usually involves an exchange of secret information between the devices, such as a PIN, to ensure that only authorized devices have access to particular services. Bonding streamlines the authentication process by allowing the device authentication information to be retained after the two devices have become disconnected. In this way, a user is not bothered to reenter authentication information every time the two devices reconnect. In practice the bond between the devices is effected through the creation of a link key shared by the two devices.

As described above, Bluetooth provides the means for creation of communications links between device and even provides higher level functionality like device authentication. Thus, Bluetooth can be thought of a as a communications toolbox that provides the hardware and software necessary to create short-range wireless network connections between two devices. It is up to device designers to determine what to do with these tools.

### SUMMARY OF THE INVENTION

An interesting problem present among Bluetooth devices is how to provide a means to readily control functions and services executed by a connected device. This ability is especially useful for devices without their own user interface (UI) or input devices. Thus, a technical advance is achieved in the art by providing systems, methods, and computer program products for enabling the control of a connected Bluetooth device.

An exemplary embodiment of the present invention employs a method for controlling a first Bluetooth device with a user interface presented by a Java application running on a second Bluetooth device. The method begins when the controlled device enters Bluetooth discoverable mode and the second device enters Bluetooth discovery mode. The second device will then request the ability to control the first device. In response the first device will request bonding to authenticate the second device. The authentication step will be accomplished by the second device by prompting its user to enter authentication information. Confirmation of the authorization information allows the two devices to create and store link keys to maintain their authorization for future encounters. The first device then pushes the second device a Java control application. The second device accepts the Java control application. The second device executes the Java application, thereby, sending signals which will control the first device.

In another embodiment of the present invention the first device chooses the Java application sent to the device from a plurality of such applications. The particular application transmitted is chosen based on the second device's class-of-device field.

Another embodiment of the present invention employs a method for exercising control over a Bluetooth device. The method begins when a first device enters Bluetooth discovery mode. The first device then discovers a second Bluetooth device capable of being controlled. The first device requests control of the second device. The first device receives a request for bonding from the first device. In response the first device requests authentication information from a user and then receives user input containing the authentication information. The authentication information is then used to bond the first and second devices. After bonding the second device pushes the first device a Java control application. The Java control application is then executed allowing the user to enter input into the first device indicating requested operations to be preformed by the second device. Commands are then transmitted to the second device.

Another embodiment of the present invention employs a method for receiving control from a Bluetooth device. The method begins with a first device entering Bluetooth discoverable mode. The first device then receives a request for control from a second device. The first device requests bonding with the second device. The first device receives authentication information from and bonds with the second device. The first device then pushes a Java control application to the second device. At some point later, the first device receives and executes commands from the second device.

Another embodiment of the present invention is a device connecting and receiving control from a second device. The device contains hardware and software capable of creating and maintaining a Bluetooth communications link. The device also has non-volatile memory storing one or more Java control applications. The device also contains software capable of communication with the second device to transmit at least one Java control application to the second device. The device also contains software capable of receiving commands from the second device and executing those commands. In an alternate embodiment of the present invention the Java application sent to the second device is chosen based on the second device's class-of-device field.

Another embodiment of the present invention is a device capable of controlling a second device. The device contains hardware and software capable of creating and maintaining a Bluetooth communications link. The device also has software capable of requesting control of the second device. The device has non-volatile memory for storing a Java control application received from the second device. The device also has hardware and software capable of executing the Java control application, receiving user input, displaying user feedback generated by the Java control application, and transmitting commands generated by the Java control application to the second device.

Other and further aspects of the invention will become apparent during the course of the description and by reference to the attached drawings.

### BRIEF DESCRIPTION OF THE FIGURES

Fig. 1 is an overview of an exemplary embodiment of the present invention.
Fig. 2 is an exemplary embodiment of a method for practicing the present invention.

### DETAILED DESCRIPTION

The following description refers to the accompanying drawings, which show exemplary embodiments of the present invention. Of course, other embodiments may be utilized and structural and functional modifications may be made without departing from the scope of the present invention.

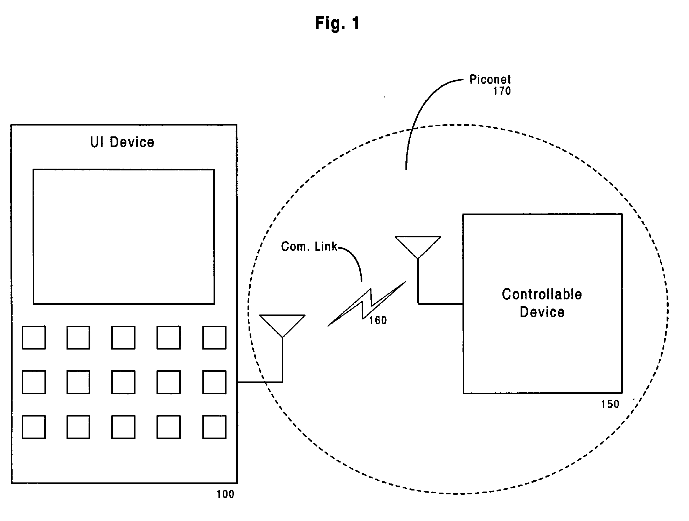

Referring now to the drawings, FIG. 1 depicts an overview of an exemplary embodiment of the present invention. As can be seen, a Controllable Device 150 and a device containing a user interface (UI Device 100) are in communication with one another. The present invention provides a means for the functional capabilities of the Controllable Device 150 to be directed from the UI Device 100. This is accomplished through communications passed over Com Link 160. As can be seen, these devices support the Bluetooth standard and are able to link and create a piconet 170 when they are within communications range of one another.

In practice, the Controllable Device 150 can be just about anything. In other words, the functionality of the controlled device is not relevant to the present invention. Generally, any device that can be electronically controlled through a software interface can be designed to function as a Controllable Device. A non-exclusive list of examples includes wireless access points, set top boxes, servers, security systems, robots, and industrial equipment.

The Controllable Device does, however, require certain functional capabilities. Chief among these capabilities is the hardware and software required to carry out communication according to the Bluetooth standard. The hardware enabling the Controllable Device must provide computational resources, e.g., CPU, memory, non-volatile storage. The computational resources are required to execute software to carry out the high level functions and communications required by the device. These include the functions required to practice the invention, such as, the ability to store software and link keys or to respond to control instructions from the UI Device. In the exemplary embodiment of the present invention the Controllable Device must have hardware capable of running a Java virtual machine.

Along with the ability to communicate according to the Bluetooth standard, the UI Device, as the name suggests, must have the capability to provide feedback to a user and to accept input from the user. This ability makes the device suitable to serve as a means for controlling the Controllable Device. Most typically, as depicted in FIG. 1, the UI Device will use a screen for visual feedback and buttons for user input. Other forms of feedback and input are certainly applicable, such as, e.g., audio feedback and pen based input. In addition to the feedback and input functionality, the UI Device must have computational resources that will allow it to run software applications. Mobile phones, personal digital assistants, laptop, tablet and desktop computers are obvious examples of suitable devices, however, any device that provides the base functionality described above could function as a UI Device. In the exemplary embodiment of the present invention the UI Device employs hardware and software capable of running a Java virtual machine. Java compatibility provides a means for allowing a wide range of generic devices to serve as UI Devices.

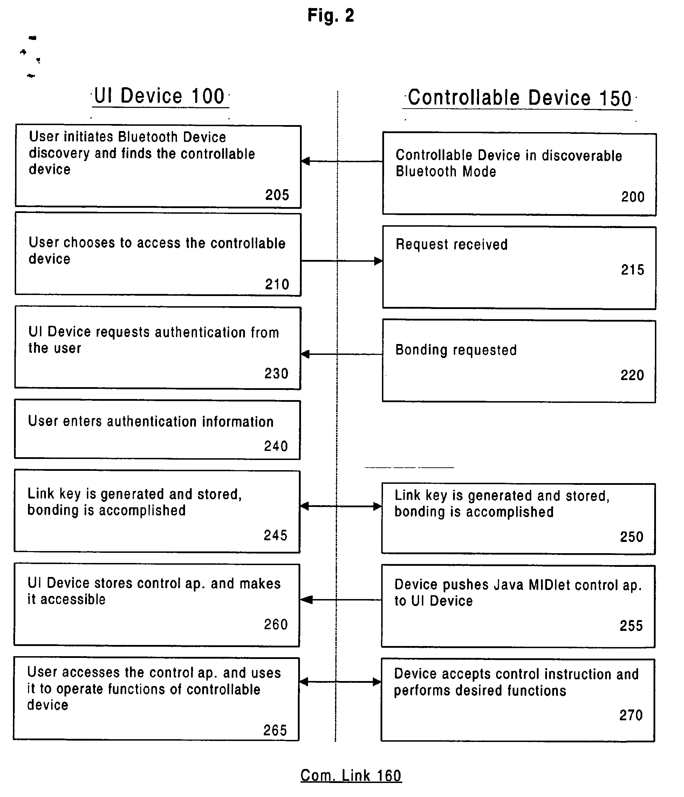

FIG. 2 demonstrates an exemplary embodiment of a method for practicing the present invention. The figure shows the steps performed by both the UI Device 100 and the Controllable Device 150. The dotted line represents the communications link 160 between the two devices and the arrows represent the flow of data.

The process begins when the Controllable Device enters discoverable Bluetooth mode (step 200). The timing of this event could vary from application to application. For instance, in an embodiment where the controlled device is a Bluetooth wireless access point (WAP) without a built in user interface or controls the WAP could enter discoverable Bluetooth mode upon being powered up. Alternately, the device might have a button that causes the device to enter discoverable mode. The WAP may further have means to communicate with a network infrastructure, such as the Internet. The UI Device could then configure the settings of the WAP in order to prepare the WAP to serve as a wireless short-range access point for various terminal devices capable of short range communication within the coverage area of the WAP.

With the Controllable Device ready to be discovered, a UI enabled Bluetooth device must be brought within range to serve as the UI Device. The user would bring a UI Device within range of the Controllable Device and initiate Bluetooth device discovery (step 205). The UI Device would thereby discover the Controllable Device. Of course, the orders of steps 200 and 205 can be reversed with the UI Device placed into discovery mode prior to the initiation of the Controllable Device entering discoverable mode. In either event, after these two steps the two Bluetooth devices are within range of one another and have begun communication.

With communications established, the Controllable Device will appear on a list of available Bluetooth devices on the UI Device. The user of the UI Device can see the Controllable Device on his list of discovered devices and request access (step 210). The Controllable Device will receive this request (step 215).

In response to the access request the Controllable Device will request Bluetooth bonding with the UI Device (step 220). The bonding request ensures that only authorized users will have the ability to control the Controllable Device. Bonding requires the exchange of initialization key information, which is used as a basis for calculating authentication. After a successful authentication an associated link key is created, which is stored by both of the devices. Thereafter, whenever a connection is reestablished between the devices, the associated link keys provide authentication between the devices.

As shown in the exemplary embodiment, the authentication process might include the entering of authorization information by a user in order to provide more security to the authentication process. The UI Device receives the bonding request and displays interface elements requesting authentication information from the user (step 230). The user enters the authentication information into the UI Device (step 240). The authentication information represents "secret" information known to the Controllable Device that is used to ensure only authorized users, i.e., those who know the secret, can access the Controllable Device's functions. The way in which the user is informed of the authorization information can vary depending on the application. For example, if the Controllable Device is a Bluetooth WAP the authorization used by the device could be printed on a sticker placed on the device during manufacturing. Other methods of authorization information distribution can be used to suit the level security required.

Continuing reference to the exemplary embodiment, with the authentication information entered into the UI Device, a link key can be generated and stored (steps 245 and 250). The exchange of link keys is a standard Bluetooth procedure and represents the end of the bonding process. As bonded devices, the UI Device and Controllable Device no longer need to perform the authorization process. In the future when the two devices come within range of one another an authenticated link will be automatically established.

In order for the UI Device to control the Controllable Device it must have the appropriate software. The Controllable Device will, therefore, push the appropriate software to the UI Device (step 255) in connection with the Bluetooth bonding procedure. It is advantageous to push the control software in connection with the Bluetooth bonding procedure because it allows the user of the UI Device to gain tools for controlling the Controllable Device readily after its first connection to the Controllable device is established. The control software push can be accomplished via the OBEX Push protocol employed by Bluetooth. As noted above, the use of Java capable devices will greatly improve the availability of compatible devices. Thus, in accordance with a preferred embodiment of the present invention, the Controllable Device will push a Java MIDlet to the UI Device. The MIDlet will have code that, when run on the UI Device, will provide user interface elements and communication signals to control the Controllable Device. As a non-limiting example, Java API for Bluetooth wireless technology defined in JSR-82 Specification of the Community Development of JAVA™ Technology Specifications (http://www.jcp.org) provides tools for an access to Bluetooth communciations for Java 2 Platform, Micro Edition (J2ME) enabled devices. Thus the MIDlet may be pushed to the UI device according to the JSR-82 Specification using Bluetooth RFCOMM or alternatively using Bluetooth PAN profile.

In accordance with another embodiment of the present invention, the process of pushing the Java MIDlet can be further refined. In this embodiment the Controllable Device has stored a number of Java MIDlets each tailored to provide the best user interface for a particular class of UI Device. In this way the strengths and weakness of a particular class UI Device can be designed for separately. For example, the interface program for a phone might have fewer functions than the interface for a PDA. Or the functions could be arranged differently to better fit a phone's reduced screen size. To practice this embodiment the Control Device examines the UI Device's CoD field and pushes one of a series of MIDlets specially tailored for the particular type of device indicated by the CoD.

After the push, the UI Device receives and stores the delivered MIDlet (step 260). The program is now accessible to the user and can be used to control the Controllable Device. The user can now run the MIDlet and use the user interface on the UI Device to issue commands representing actions of the Controllable Device (step 265). The commands will be interpreted by the UI Device and then transmitted over the Bluetooth link. The commands will then be executed by the Controllable Device (step 270).

The present invention provides significant advantages over the prior art by enabling the UI Device 100 to control the Controllable Device 150 immediately after Bluetooth bonding, during the first connection between the devices. This enables a user of the UI Device to control the Controllable Device immediately after the Bluetooth connection and authentication procedures, which provides the user with simple tools for controlling the Controllable Device. If no control software is available during the first connection, some specified information must be communicated between the devices in order to allow the UI Device to confirm access authorization and receive control software from the Controllable Device, which leads to more complex, less user friendly, device operation.

When the control software is pushed in connection with the Bluetooth bonding procedure, additional security is gained. For example, in embodiments where the Controllable Device makes itself discoverable the first time it is powered up, the user will most likely bring an authorized UI Device in range of the Controllable Device during power up. The security features can be relatively relaxed at this time because one can presume that the person starting the Controllable Device for the first time is an authorized user. Accordingly, additional security features can be associated with the Controllable Device to obstruct the Controllable Device from providing control software to other devices later on. These additional features would require the Controllable Device to challenge the UI Device to provide additional security authentication in order to access secure software, including the control software. Such an embodiment may be valuable where the Controllable Device is designed to operate in public places, such as, for example, a Bluetooth wireless access point located in a public space, like a shopping mall. This extra security is required because in a public place there is a greater chance of fraudulent behavior from outside sources.

The present invention is also advantageous because after the initial bonding procedure whenever the UI Device requests connection with the Controllable Device, the time necessary for reconnection is shortened. The quicker connection is possible because the UI Device can skip the inquiry procedure when deciding to control the Controllable Device. This is possible because the UI Device already has the control software available and is already familiar with the Bluetooth Address of the Controllable Device, therefore, the Bluetooth connectioncan begin by simply paging the Controllable Device.

The many features and advantages of the present invention are apparent from the detailed specification, and thus, it is intended by the appended claims to cover all such features and advantages of the invention which fall within the true spirit and scope of the invention.

Furthermore, since numerous modifications and variations will readily occur to those skilled in the art, it is not desired that the present invention be limited to the exact instruction and operation illustrated and described herein. Accordingly, all suitable modifications and equivalents that may be resorted to are intended to fall within the scope of the claims.

## Claims

1. A method for connecting and exercising control between Bluetooth devices comprising:
initiating and establishing a Bluetooth connection between a first Bluetooth device and a second Bluetooth device by performing Bluetooth inquiry and paging protocols;
requesting, by the first Bluetooth device, bonding with the second Bluetooth device;
accepting, by the second Bluetooth device, user input comprising authentication information associated with the first Bluetooth device;
bonding the first Bluetooth device, with the second Bluetooth device by creating an associated link key and storing said link key by each of the first Bluetooth device and the second Bluetooth device, wherein the first Bluetooth device, in connection with said bonding, further pushes a Java application to the second Bluetooth device, wherein the Java application comprises functionality enabling the second Bluetooth device to control the first Bluetooth device;
storing, by the second Bluetooth device, the pushed Java application; and
executing, by the second Bluetooth device, functions of the stored Java application, wherein the execution leads to sending control signals to the first Bluetooth device for controlling the first Bluetooth device.

2. The method of claim 1 further comprising:
examining, by the first Bluetooth device, the second Bluetooth device's class-of-device field; and
wherein the Java application pushed to the second Bluetooth device is chosen based on the contents of the second Bluetooth device's class-of-device field.

3. The method of claim 1 wherein the first Bluetooth device is a wireless access point.

4. The method of claim 1 wherein the Java application is a MIDlet.

5. A method for connecting with and exercising control over a Bluetooth device comprising:
entering Bluetooth discovery mode;
discovering a controllable device;
receiving a request for bonding from the controllable device;
prompting a user to enter authentication information;
using the authentication information to effect bonding by creating an associated link key with the controllable device and storing said link key, and receiving a pushed Java control application in connection with said bonding;
executing the received Java control application with a Java virtual machine; receiving user input to the Java control application; and
transmitting commands to the controllable device.

6. A method for connecting and receiving control from a Bluetooth device comprising:
entering discoverable Bluetooth mode;
receiving a request for control;
requesting bonding with requesting device;
receiving bonding authorization information and bonding with requesting device by creating an associated link key with the requesting device and storing said link key, and pushing a Java control application to the requesting device in connection with said bonding;
receiving commands from the requesting device; and
executing the received commands.

7. The method of claim 6, wherein the Java control application pushed is chosen based on a class-of-device indicator received from the requesting device.

8. A device for connecting and receiving control from a second device comprising:
hardware and software means for creating and maintaining a Bluetooth communications link with the second device;
non-volatile computer memory;
a Java application, for controlling the device, stored on the non-volatile memory; means for transmitting the Java application to the second device in connection with a Bluetooth bonding procedure;
means for receiving commands from the second device; and
means for executing the received commands.

9. The device of claim 8 further comprising:
at least one or more additional Java applications, for controlling the device, also stored on the non-volatile memory; and
wherein the particular Java application transmitted to the second device is determined based on a class-of-device indicator received from the second device.

10. A device for controlling a second device comprising:
hardware and software means for creating and maintaining a Bluetooth communications link with the second device;
non-volatile computer memory;
means for requesting control of the second device;
means for receiving and running a Java application sent by the second device in connection with Bluetooth bonding procedure; and
means for accepting user input and displaying user feedback;
means for transmitting commands to the second device generated by the Java application in response to user input.
